# EUROPEAN PATENT APPLICATION

(11) **EP 2 311 689 A1**
(43) Date of publication of application: **20.04.2011**
(21) Application number: 10013338.8
(22) Date of filing: 06.10.2010
(51) Int. Cl.: B60R 13/00, B44C 3/02, B44C 1/17, B44C 1/14, B29C 45/00, B60R 13/04

(54) **Method for manufacturing a decorative member, particularly intended to be used as an emblem on a motor vehicle**

(30) Priority: 16.10.2009 IT TO20090786
(71) Applicant: ZANINI HOLDING S.p.A., 28040 Paruzzaro (Novara) (IT)
(72) Inventor: Zanini, Paolo, 28041 Arona (Novara) (IT); Franzino, Mario, 20127 Milano (IT)
(74) Representative: Cian, Paolo

(57) **Abstract**

A method for manufacturing of a decorative element, particularly intended to be used as an emblem on a motor vehicle, comprises the steps of forming a body (12) of a transparent plastic material, having a front face (12a) and a back face (12b) which comprises a base surface (13) and at least a shaped hollow impression (14a, 14b) defining a tridimensional symbol (16a, 16b) raised with respect to the base surface (13), applying a decoration layer (18) usually coloured and/or providing an ornamental pattern, on the base surface (13), and forming a metalized layer (20) on the back face (12b) by a paint containing metallic pigments so that also the inner surface of each hollow impression (14a, 14b) is coated. The pigments of the metalized layer (20) are laminar metallic pigments, and the metalized layer (20) is made by spray applying a plurality of coats of pigmented paint according to mutually crossing directions, in which the pigments are oriented parallel to the surface of the back face (12b).

## Description

The present invention refers in general to decorative members to be used for example as emblems in order to represent symbols or marks, particularly intended to be applied on motor vehicles in order to allow the producer to be identified.

In particular, the invention relates to a method for manufacturing such a decorative member, of the type defined in the preamble of appended claim 1.

This method, known from EP-1 927 480, comprises initially the step to form a body of transparent plastic material, typically made by moulding, the back face of which comprises a base surface, which is flat or slightly concave, and at least a hollow shaped impression adapted to define a symbol. Only on the base surface, except for the hollow impressions, a usually coloured transparent layer is applied before, and then a metallic layer with reflecting characteristics, in such a manner that these two overlapping layers confer a reflecting aspect to the base surface. Subsequently, on the whole base surface, therefore also inside each hollow impression, a single pigmented paint layer, typically including metallic pigments, is applied, and on the pigmented paint layer a protective layer with a function of outer cover is finally applied.

Although the decorative member of this document is able to produce a good effect of depth and tridimensionality of the image reproduced by it, it has the drawback that it does not stands out in a full satisfactory manner. In fact, the traditional type of pigmented paint used, that commonly comprises pigments having a generally spherical or globular shape, does not allow a clear and highly defined appearance to be obtained for the symbol, that instead turns out to be rather opaque and dull.

Therefore, it would be desirable to make a decorative member standing out in a very clear manner, and having an improved aesthetic worth in order to determine a strong attraction for the attention of an observer.

In view of the attainment of this object, the subject of the invention is a method for manufacturing of a decorative member, particularly intended to be used as an emblem on a motor vehicle, such as claimed.

By virtue of the method of the invention, a very bright decorative member can be obtained, which is highly clear and defined, and has improved characteristics of visibility by an observer, so that it is able to exercise an effective attraction. Moreover, the decorative member according to the invention can be made by mass production with reduced costs and, for its constitution, it allows to comply with the requirements of duration and resistance to atmospheric agents imposed by motor vehicles manufacturing industries.

Further characteristics and advantages of the invention will turn out to be clearer from the following detailed description, supplied as a non-limitative example and referred to the appended drawings in which:
- figure 1 is a schematic front perspective view of a first modification of a decorative member made by the method of the invention,
- figure 2 is a perspective view of the member of figure 1 sectioned along line II-II of such a figure,
- figure 3 is a side elevational view sectioned from arrow III of figure 2,
- figure 4 is a view similar to figure 3 of a second modification of the member of the invention,
- figure 5 is a view similar to figure 3 of a third modification of the member of the invention, and
- figure 6 is a view similar to figure 4 of a fourth modification of the member of the invention.

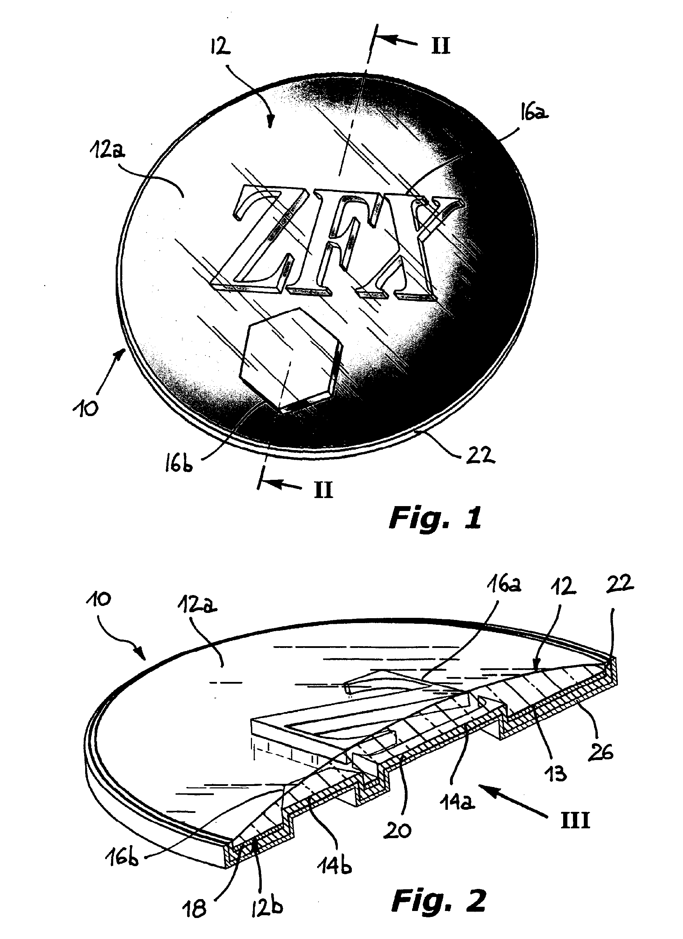

With initial reference to figures 1 to 3, a decorative member that can be obtained by a first modification of a method according to the invention, is indicated 10. In spite of the fact that the shape of the member 10 of these figures is circular, it could obviously be any one.

The emblem 10 comprises a body 12 of transparent plastic material, usually of polymethyl-methacrylate (PMMA), of polycarbonate (PC) or of another material with similar characteristics of transparency, formed by a moulding process, typically of the injection type.

The front face 12a of the body 12, intended to face towards the outside in the use, and therefore towards an observer, is substantially smooth and preferably has a convex shape, while the back face 12b, opposite to the face 12a, includes a flat or slightly concave base surface 13, so that the body 12 has the general appearance of a lens.

In the body 12, a series of shaped hollow impressions 14a and 14b are formed during the moulding thereof, which impressions have walls transverse to the base surface 13 and define the outline of an image to be seen by means of the emblem 10. Therefore, the image defined by the impressions 14a and 14b is tridimensional since it projects from the base surface 13 towards the front face 12a, and it is mostly visible thanks to the lens configuration of the body 12.

In the more general case, the image defined by the impressions 14a and 14b includes a commercial trade name or a word 16a consisting of letters, and/or a graphical member 16b such as a drawing or a logo.

The plastic material used for making the body 12 preferably contains an agent adapted to filter UV rays, so that the body 12 carries out a protective action for the underlying layers, the latters being described in detail in the following. The filtering agent may consist of a substance belonging to the benzotriazole family. In particular, by adding about 2.5% in weight of a masterbatch concentrated containing 2-(2H-benzotriazole-2-yl)-p-cresol to the plastic material of the body 12, an effective filtering action against UV rays can be obtained.

Before the moulding step, the plastic material of the body 12 is prepared by subjecting it to a dehumidification process, in order to remove any possible humidity from the material.

The moulding step of the body 12 is performed by using moulds with a mirror finished surface, and having therefore a surface roughness usually smaller than 1 µm, in such a manner that the back surface of the body 12, at least at the hollow impressions 14a and 14b, is mirror finished.

After the moulding step, the body 12 preferably undergoes again a dehumidification process, in order to remove any possible remaining humidity trace.

Then, the back surface of the body 12, at least at its impressions 14a and 14b, is subjected to a crown effect cleaning process by means of electric discharges or cold plasma or liquid CO₂, in order to eliminate possible dusts, impurities and traces of fat.

A decoration bottom layer 18 including a pigmented ink, for example transparent and preferably acrylic-vinylic based, is applied only on the base surface 13 of the back face 12b, with a thickness of some micron. The pigments of the ink of the layer 18, which are usually coloured and are conveniently of the type resistant to the action of UV rays, serve to give a colour to the base surface 13, or to define an ornamental pattern on it. In particular, the ink layer 18 can be monochromatic if the background of the emblem 10 must be coloured in an even manner, or define several coloured zones when a polychrome effect is desired to be obtained.

The layer 18 is preferably applied by stamping out or moulding by a pad (pad-printing), by using a pad or a roll soaked by the pigmented ink, or by means of a serigraphic process.

After application of the layer 18, a metalized layer 20 is made on the whole back face 12b by using a paint containing metallic pigments, typically aluminum pigments. Differently from the metallic pigments of the traditional metalized paints, which have a spherical or globular shape with diameter in the range between about 5 and 30 µm, the metallic pigments of the paint used in the method of the invention for making the metalized layer 20, are laminar pigments having a thickness usually in the range between about 1 and 15 Å, with a substantially circular shape the diameter of which is in the range between about 10 and 15 µm.

The layer 20 is made by spray applying a plurality of coats of the aforesaid metalized paint on the whole back face 12b of the emblem 10, and therefore on the inner surface of the impressions 14a and 14b, and also on the back surface of the layer 18 and on the outer surface of a perimetrale edge 22 of the member 10. In particular, the direction of application of each coat is tilted, or crossed, with respect to that of the adjacent coats.

Thus, a metalized layer 20 is obtained that constitutes in practice a continuous metallic film with characteristics of almost perfect reflection and clearness, since the laminar shape and the very small size of the metallic pigments of the paint allow very thin and compact layers to be obtained, in which the pigments are oriented parallel to the surface of the back face 12b, in particular to the inner surface of the impressions 14a and 14b. This parallel orientation of the pigments, caused by the electrostatic linkage between the material of the body 12 and the metallic pigments of the first pigmented paint coat, as well as between the metallic pigments of the different further coats, allows hiding power and reflectance of the surface to be increased, so that the layer 20 becomes just analogous to a continuous metallic layer. A metalized layer with these characteristics, in the past, could only be obtained by using other processes such as vacuum metalization or ionic vaporization (sputtering), which are remarkablly more expensive and intrinsically little resistant to atmospheric agents.

The treatments performed on the plastic material of the body 12 before and after the moulding thereof, as well as the mirror finish of the back face surface 12b, allow the service life and the clearness of the image of the decorative member 10 to be remarkably increased. In fact, by virtue of the mirror finish of the surfaces on which the layer 20 is applied, the pigments of the metalized paint are applied on a surface lacking in any discontinuity, which allows an optimal specular effect to be obtained. Moreover, by virtue of the fact that any trace of humidity has been removed from the material of the body 12, that otherwise could oppose adhesion of the metallic pigments and promote its oxidation, the weatherability of the image of the member 10 turns out to be improved in the time.

In spite of the fact the layer 20 requires a series of paint coats to be applied, the method turns out to be simpler and cost saving in its whole, with respect to those used in the prior art for obtaining images with a specular reflection. In particular, the whole time required for drying of the various coats of the layer 20 is substantially smaller than that required for drying a single thicker layer of metalized paint used in the prior art, containing spherical or globular metallic pigments of a much greater size.

On the whole back surface of the layer 20, including the outer surface of the edge 22, a protective covering layer 26 is then applied by spray painting. The layer 26 is preferably made by a dark coloured, for example black, polymeric polyurethan or acrylic based paint, with a low content of coloured pigments.

Conveniently, the protective layer 26 includes at least 10% in weight of zinc powder. The zinc contained in the layer 26 carries out a function of anodic protection of the aluminum metallic pigments of the layer 20 towards the corrosive atmospheric agents, both acid or basic based. This protection is particularly useful when the member 10, as often happens, is subsequently fixed to a support frame shaped member (not shown), usually made of plastic material with chromium plated surface, since the presence of chromium may make worse galvanic corrosion phenomena of the aluminum pigments contained in the layer 20.

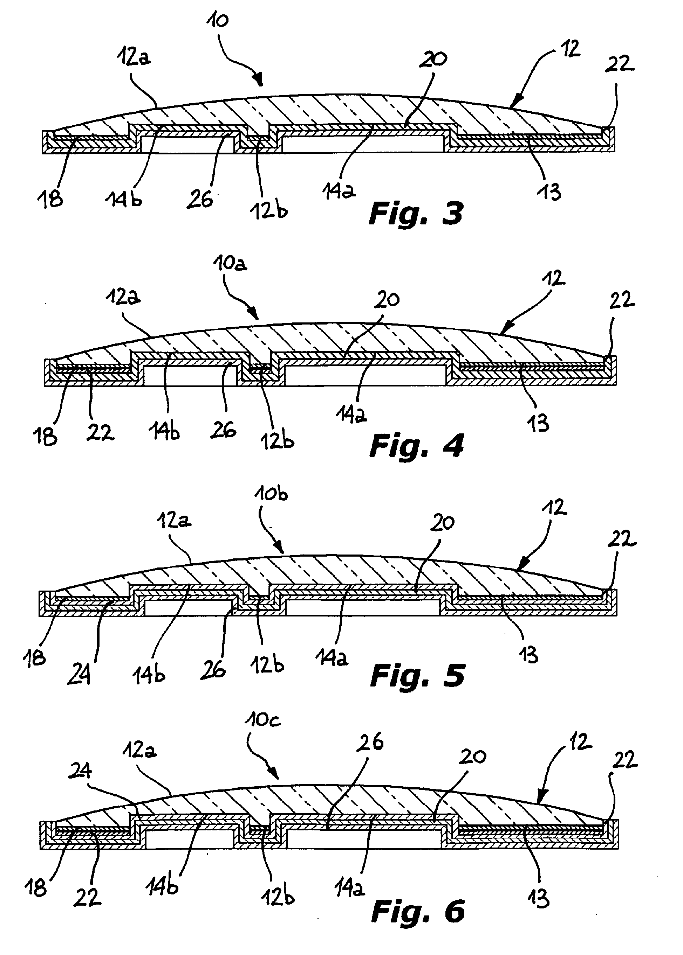

Figure 4, that is similar to figure 3, shows a second modification of the decorative member of the invention, here indicated by reference 10a. The numeral references used in this figure for indicating elements equal or similar to those of the previous modification, are the same of the previous figures, and the elements already described will not be considered again.

The decorative member 10a is made with a decoration layer 18 containing transparent coloured pigments, and moreover includes a metallic laminar layer 22 having characteristics of specular reflection, preferably of bright chromium, applied directly on the back surface of the layer 18. In this manner, the layers 18 and 22 applied on the flat surface of the face 12b constitute a reflecting and coloured bottom surface.

Preferably, the laminar metallic layer 22 is applied by using the known hot-stamping technology, consisting of a dry stamping process by means of which coloured pigments or a thin metallic layer are permanently transferred on a component starting from a continuous support film, for example of a plastic material, as a result of the application of pressure and/or heat. Commonly, in the hot-stamping process, a silicone rubber pad or roll, the shape of which corresponds to the shaped surface to be stamped, is commonly used. As an alternative, the pigmented ink layer 18 may be directly applied on a metallic sheet or on a metalized sheet constituting the layer 22, and then the layers 18 and 22 are transferred together on the base surface 13 of the body 12 by a single step, for example of hot-stamping.

Figure 5, that is similar to figure 3, shows a third modification of the decorative member of the invention, indicated here by reference 10b. The numeral references used in this figure for indicating equal or similar elements, are the same of figures 1 to 3, and the elements already described with reference to the first modification will not be considered again.

The decorative member 10b includes moreover a layer 24 of transparent coloured paint, applied by a spray application process on all the back surface 12b of the body 12, including therefore also the impressions 14a and 14b.

The layer 24, that is therefore interposed between the impressions 14 and 14b of the body 12 and the layer 20, allows a colour of a desired tonality to be given to the layer 20, and possibly to the layer 18. In particular, if the layer 20 contains aluminum pigments and therefore constitutes a metallic film having an appearance similar to bright steel or silver, a layer 24 yellow or red coloured allows an appearance of the image of the decorative member 10b similar to the gold or copper to be obtained, respectively.

Figure 6, that is similar to figure 5, shows a fourth modification of the decorative member of the invention, here indicated by reference 10c. The numeral references used in this figure for indicating equal or similar elements, are the same of figures 1 to 5, and the elements already described with reference to the previous modifications will not be considered again.

The decorative member 10c, comprises both the layer 22 at the back of the layer 18, described with reference to the second modification, and the coloured layer 24 described with reference to the third modification, which layers are applied on the back face 12b before the metalized layer 20 is made on it.

## Claims

1. Method for manufacturing a decorative member, particularly intended to be used as an emblem for a motor vehicle, including the steps of:
- forming a body (12) of a transparent plastic material, having a substantially smooth front face (12a) and a back face (12b) comprising a base surface (13) and at least a shaped hollow impression (14a, 14b) adapted to define a tridimensional symbol (16a, 16b) raised with respect to the base surface (13),
- applying a decoration layer (18), usually coloured and/or providing an ornamental pattern, on the base surface (13),
- forming a metalized layer (20) on the back face (12b) by a paint containing metallic pigments, in order to cover also the inner surface of each hollow impression (14a, 14b),
**characterized in that** said metallic pigments of the metalized layer (20) are laminar metallic pigments, and **in that** the metalized layer (20) is formed by spray applying a plurality of coats of pigmented paint according to mutually crossing directions, the pigments being oriented in such coats substantially parallel to the surface of the back face (12b).

2. Method according to claim 1, **characterized in that** said laminar metallic pigments have a generally circular shape, which diameter is in the range from about 10 to 15 µm, and which thickness is in the range from about 1 to 15 Å.

3. Method according to claim 1 or 2, **characterized in that** the body (12) is moulded by means of a mould having the active moulding surface that, at least at said hollow impressions (14a, 14b) of the body (12) has a mirror finish with a surface roughness generally smaller than 1 µm, whereby also the back surface (12b) has a mirror finished surface.

4. Method according to any one of claims 1 to 3, **characterized in that** the plastic material used for manufacturing the body (12) undergoes a dehumidification process before moulding the body (12).

5. Method according to any one of claims 1 to 4, **characterized in that** the body (12), after the moulding operation, undergoes a dehumidification process.

6. Method according to any one of claims 1 to 5, **characterized in that** the plastic material used for manufacturing the body (12) is a polymethyl-methacrylate or polycarbonate based material, and it contains a UV rays filtering agent in order to carry out a protective action for the underlaying layers (18, 20; 18, 24, 20).

7. Method according to any one of claims 1 to 6, **characterized in that** the back surface (12b) of the body (12), after the moulding operation, undergoes a cleaning process by means of crown effect, cold plasma or liquid CO₂, at least at said hollow impressions (14a, 14b).

8. Method according to any one of claims 1 to 7, **characterized in that** said decoration layer (18) is a transparent coloured layer that, before said metalized layer (20) is formed, is associated with a metallic film (22) so that a reflecting appearance is conferred to the decoration layer (18).

9. Method according to any one of claims 1 to 8, **characterized in that** a transparent coloured paint layer (24) is applied on all the back surface (12b) of the body (12), typically by means of a spray application process, before said metalized layer (20) is formed.

10. Method according to any one of claims 1 to 9, **characterized in that** it comprises the step of applying a protective covering layer (26), preferably consisting of a polyurethan or acrylic based paint, on the surface of the metalized layer (20) facing the side opposite to the body (12).

11. Method according to claim 10, **characterized in that** the paint of said protective covering layer (26) comprises at least 10% of zinc powder.
